# EUROPEAN PATENT SPECIFICATION

(11) **EP 3 112 836 B1**
(45) Date of publication and mention of the grant of the patent: **16.02.2022**
(21) Application number: 16177665.3
(22) Date of filing: 01.07.2016
(51) Int. Cl.: G01M 5/00, G01M 7/08, G01N 3/30, G01N 3/307

(54) **DEVICE AND METHOD FOR DETECTING THE STRUCTURAL INTEGRITY OF A SAMPLE OBJECT**
VORRICHTUNG UND VERFAHREN ZUR ERKENNUNG DER STRUKTURELLEN INTEGRITÄT EINES PROBENOBJEKTS
DISPOSITIF ET PROCÉDÉ POUR DÉTECTER L'INTÉGRITÉ STRUCTURELLE D'UN ÉCHANTILLON D'OBJET

(30) Priority: 02.07.2015 IT UB20151812
(43) Date of publication of application: 04.01.2017
(73) Proprietor: UNIVERSITA' DEGLI STUDI DI TRIESTE, 34127 Trieste (IT)
(72) Inventor: Caniato, Marco, 31015 Conegliano (TV) (IT)
(74) Representative: Petraz, Gilberto Luigi

(56) References cited:
- EP-A1- 1 531 326
- WO-A1-2008/151581
- WO-A1-2015/069218
- CZ-A3- 20 130 815
- FR-A1- 2 883 056
- US-B1- 6 324 915

## Description

### FIELD OF THE INVENTION

Embodiments described here concern a device and method for detecting the structural integrity of a sample object.

In particular, embodiments described here concern a device for detecting structural integrity configured to determine the presence of defects in resilient materials such as, for example, consolidated polymers or metal materials or materials of other types used in the industrial field in general. In other words, embodiments described here concern a device for detecting the structural integrity of a sample object that is used in the building trade, mechanical and industrial field in general (and hence objects made of concrete materials, composite fibers, plastic, metal and suchlike).

Furthermore, embodiments described here concern a device for detecting structural integrity configured to carry out a test of the non-destructive type on a sample object.

By way of example, embodiments described here can be used in the building trade to control the structural integrity and/or to determine the presence of defects in a sample object made of a specific material. In particular, in the building trade, the device according to the present description allows to define quantitatively the resilient characteristics of the materials used as acoustic insulators.

Furthermore, embodiments described here concern a device for detecting the structural integrity of a sample object that has considerable flexibility of use. In fact, in one case, the detecting device according to the present description allows to perform an instantaneous detection on a sample object during the production step of the material itself. In another case, the detecting device according to the present description allows to monitor the deterioration in the mechanical and/or physical characteristics of a material/structural element throughout its working life.

### BACKGROUND OF THE INVENTION

Nowadays it is fundamental to have a final validation of a product/material so as to be able to guarantee that it has all the predetermined physical/chemical/ mechanical characteristics. It is known that the final validation can be obtained by different control tests carried out with respective detecting devices, each one characterized by the basic physical functioning principle.

In the current state of the art detecting devices are known that allow to carry out control tests of the destructive type or the non-destructive type.

Detecting devices configured for destructive control tests generally have a functioning principle of the mechanical and/or thermal type. Therefore, destructive control tests are the mechanical and/or thermal type and provide mechanical and/or thermal stresses on the sample product. Detecting devices for destructive control tests are discreetly sophisticated and require controlled spaces and environments to guarantee at least the repeatability of the test. Control tests of the mechanical and/or thermal type provide to make samples of the material to be tested (called test pieces) which generally are disposable samples because they are stressed during the test to such a point that their physical/chemical/mechanical characteristics are altered and they therefore cannot be used afterward. In the current state of the art detecting devices are known, configured to detect anomalies directly on samples that are structural elements with predetermined shape and sizes because they are semi-worked products inserted into the overall structure, for example, of a motorway bridge or in the structure of an airplane.

By way of example, document WO9119173A1 concerns a method and a system for the non-destructive evaluation of the structural integrity of a mechanical product made of composite fibers. The method according to this document is intended in particular to evaluate the rigidity, resistance and damping characteristics of a composite structure.

In the current state of the art, detecting devices are also known, configured for non-destructive control tests which generally have a "non-invasive" functioning principle, such as for example ultrasounds, X rays or other similar techniques. Therefore, non-destructive control tests are carried out by rather complex devices, generally expensive and which require suitably equipped specialized laboratories.

Other detecting devices for non-destructive tests can be cited, as well as those cited above, such as for example detecting devices with a magnetic particle system, detecting devices with a system with induced currents or detecting devices with a vibrational type system.

By way of example, document US 5533399A concerns a non-destructive mechanical method to determine the elastic properties of a structural material by means of an impulse imparted by a hammer equipped with a force transducer of the piezoelectric type to a slab-like sample in turn equipped with a miniaturized piezoelectric sensor.

In general, if it is necessary to control a product/material made in a highly industrialized production line, the quality testing techniques must be integrated as much as possible with the production line itself, emphasizing even more the basic characteristics of speed, precision and reliability. To this purpose, detecting devices have been created that use specific techniques for the rapid and non-destructive analysis of samples to be made directly along the production line. Among these known techniques there is the acoustic technique which, compared with others, is most suitable for determining the quality characteristics of the product/material under in line production conditions. Generally, the acoustic test on an object allows to identify the type and position of the defect on the product/material by analyzing (usually using the FFT technique) the acoustic responses recorded. A particular variant of the acoustic testing technique provides to analyze the modal components on finished metal products to be compared with that of a standard reference test piece, substantially a comparative acoustic test technique.

By way of example, document EP371631A2 shows an analysis method and the corresponding apparatus to carry out a qualitative analysis on structural elements stressed by transitory structural loads.

Having said this, known detecting devices for carrying out destructive and non-destructive control tests all suffer from some limitations in use and other counter-indications that often make them difficult to use and in any case give a test result that is not very reliable.

In particular, destructive control tests of the mechanical and thermal type require a step of preparing the test pieces according to legal requirements that lay down their shape and sizes. Furthermore, as we said, the test pieces made are dedicated only to the single control test session, as they cannot be re-used in any other way. In addition, detecting devices for thermal type control tests function for a long time due to the long duration of the control tests, which can even last several hours. In particular, tests of the mechanical type require a long preparation of the samples and it is often necessary to sacrifice artefacts from which the test pieces are made, or special test pieces have to be made. In other words, detecting devices for mechanical destructive control tests are not very adaptable or flexible in use, and thus entail considerable costs and a long time to make the test pieces. These aspects of costs and production times for the test pieces are also caused by the obligatory legal requirements that lay down precisely the shape and sizes of the samples.

With regard to detecting devices for carrying out non-destructive control tests, they also suffer from some limitations which sometimes prevent them from being used and/or affect the effective functioning of the devices themselves. In particular, as we mentioned above, known detecting devices for non-destructive control tests are rather costly and require equipped spaces, well isolated from the rest of the production space (such as for example a separate laboratory from the production department) and above all require highly qualified and expert staff.

Moreover, detecting devices using non-destructive control tests can be used on some materials but not on others. In fact, detecting devices for non-destructive control tests can entail using conductive/magnetic materials which, in practice, make the test based on this specific technique not applicable to certain categories of materials, such as materials with a polymer base for example.

Another example of the limitations of detecting devices using acoustic type control tests is that they are not suitable to be used in an industrial plant where the background noise of the working can interfere with the signal and with data processing, distorting the final results.

As we have already mentioned, detecting devices using non-destructive control tests often have the problem that they emit potentially dangerous emissions, or dangerous for the worker responsible, such as for example X rays, ionizing emissions, ultrasounds, carcinogenic emissions. It is also acknowledged that the residues of special materials or substances (like radioactive ones) used by non-destructive detecting devices of the known type must be disposed of adequately.

Document US2013/160519 A1 is also known, which describes a device for impact tests comprising an impacting head or beater, especially to test electronic devices such as cell phones for example. The test device has a work plate configured to support the electronic device and an impacting head, a lifting element to lift the work plate and a gas cylinder disposed in correspondence with the impacting head. Once it has reached a predetermined height, the work plate is left to fall until the impacting head hits the gas cylinder, thus simulating a fall of the electronic device which is housed on the plate. A piezoelectric transducer is used to acquire the value of the force of impact and to transmit the electronic signal to a computer. The impacting head can comprise a metal substrate on which a layer of rubber is disposed, bonded by an epoxy type glue. An impacting head or beater is also provided, which allows to meet the requirements of IEC 60068-2-27 2008, specific for impact tests.

Document EP1160560 concerns a device for the mechanical testing of the telescopic portion of steering columns in the automotive field by means of an impact of a beating mass on a front or preliminary mass disposed on the side of the steering wheel of the column. The column appears fixed to an adjustable support base able to reproduce various inclinations of the column (when in use) and therefore able to perform a validation test according to numerous operating conditions of the column. In the body of the preliminary mass a force sensor is inserted, such as a load cell.

Document WO-A-2015/069218 describes a method and an apparatus for non-destructive detection of tire anomalies.

There is therefore the need to perfect a device and a method for detecting the structural integrity of a sample object that can overcome at least one of the disadvantages of the state of the art.

In this context, the technical aim on which the description is based is to propose a device and a method for detecting the structural integrity of a sample object that overcomes the disadvantages and limitations of the state of the art as described above.

In particular, one purpose according to the present description is to make available a device and a method for detecting the structural integrity of a sample object which allows to perform non-destructive control tests without invalidating in any way the sample object tested.

Another purpose according to the present description is to make available a device and a method for detecting the structural integrity of a sample object which is adaptable to production requirements in the industrial field, that is, which is flexible in use and can therefore be carried out directly along a production line.

Another purpose according to the present description is to make available a device and a method for detecting the structural integrity of a sample object that allows to carry out the control tests without producing potentially dangerous emissions for the user, such as for example X rays, ultrasounds, ionizing or carcinogenic emissions in general.

In addition, another purpose according to the present description is to make available a device and a method for detecting the structural integrity of a sample object that allows to carry out the control tests totally automatically and without needing specialized laboratories or manpower.

The Applicant has devised, tested and embodied the present invention to overcome the shortcomings of the state of the art and to obtain these and other purposes and advantages.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

### SUMMARY OF THE INVENTION

The present invention is set forth and characterized in the independent claims 1 and 16, while the dependent claims describe other characteristics of the invention or variants to the main inventive idea.

In particular, the technical aim and the purposes specified are substantially achieved by a device for detecting the structural integrity of a sample object comprising the technical characteristics set forth in one or more of the attached claims.

In accordance with some embodiments, a device is provided configured to detect the structural integrity of a sample object. In accordance with one embodiment the device comprises:
- a beating element configured to impart a mechanical stress of the impulsive type on the sample object;
- a rigid inertial body configured to support the sample object and to counteract rigidly the mechanical stress;
- acquisition means to monitor a response signal from at least the stressed sample object and operatively associated at least with the inertial body;
- an exciting body that can be activated on the sample object, the sample object being in turn operatively associated with the acquisition means, the beating element being such as to impart a mechanical stress to the sample object impacting on the exciting body.

The acquisition means comprise at least one transducer configured to detect a response signal from said sample object and/or from said exciting body in an operating configuration of use of said device, said response signal being a signal containing at least one vibration frequency of the sample object.

The exciting body has an impact surface configured to impact said beating element and a transmission surface configured to contact a respective surface of said sample object in an operating configuration of use of said device.

In accordance with one embodiment, the exciting body and the sample object are respectively able to be configured to provide a mass-spring system supported by the inertial body and wherein the spring of said system is the sample object subjected to testing.

In other words, the sample object subjected to testing is itself an integral part of the testing system achieved by the detecting device according to the present description.

In accordance with other embodiments, a method to detect the structural integrity of a sample object is provided. In accordance with one embodiment the method comprises:
- imparting a mechanical stress of the impulsive type on the sample object by means of a beating element;
- supporting the sample object and counteracting rigidly the mechanical stress by means of an inertial body;
- monitoring a response signal from at least the stressed sample object by means of acquisition means operatively associated at least with the inertial body;
- activating an exciting body on the sample object, the sample object being in turn operatively associated with the acquisition means, the beating element imparting a mechanical stress to the sample object impacting on the exciting body.

In the present method, the acquisition means comprise at least one transducer configured to detect a response signal from said sample object and/or from said exciting body in an operating configuration of use of said device, said response signal being a signal containing at least one vibration frequency of the sample object.

Moreover, in the present method, the exciting body has an impact surface configured to impact said beating element and a transmission surface configured to contact a respective surface of said sample object in an operating configuration of use of said device

In accordance with one embodiment, the exciting body and the sample object respectively create a mass-spring system supported by the inertial body and wherein the spring of the system is the sample object subjected to testing.

Advantageously, in this way, a method and a detecting device of the structural integrity of a sample object are made available so it is possible to determine the structural integrity and/or the homogeneity thereof in the form of a response signal containing at least a vibration frequency of the sample object itself and in which the sample object constitutes the spring of the mass-spring system of the device and of the measuring method.

In accordance with other possible embodiments, the device according to the present description can include a processor configured to analyze a resonance frequency of the sample object subjected to testing following mechanical stress and to detect the presence of not only a maximum peak in the development of the resonance frequency, but also one or more minor peaks as well, correlating at least the overall number of peaks, maximum and minor, and possibly their entity, to the structural integrity of the sample object.

In accordance with other possible embodiments, the method according to the present description can include:
- analyzing a resonance frequency of the sample object subjected to testing following the mechanical stress,
- detecting the presence of not only a maximum peak in the development of the resonance frequency, but also one or more minor peaks as well,
- correlating at least the overall number of peaks, maximum and minor, and possibly their entity, to the structural integrity of the sample object.

Advantageously, the device and method according to the present description are intended to identify if there is more than one resonance peak, that is, not only the maximum peak but also minor peaks, normally ignored in the state of the art, exciting the system by means of impact and moving the source and the one or more receivers along the surface area of the upper exciting body.

On the contrary, the standard procedures in accordance with ISO 7626-5 require to identify and take into consideration only the maximum value or peak measured of the resonance frequency, irrespective of how many minor resonance peaks can actually be detected. Only this maximum peak value is used in accordance with ISO 7626-5, and only to evaluate the dynamic rigidity, ignoring the other minor values (minor peaks).

Surprisingly, therefore, the inventor has found experimentally that, taking into consideration not only the maximum peak, but also the other minor values (minor peaks) of the resonance frequency it is possible to carry out a detection of the structural integrity of a sample object and, for example, to detect the presence of gaps, discontinuities, insertions of material, composite layers, or other structural anomalies. This is particularly advantageous in the application of the device and method according to the present description to detect the structural integrity of a sample object made of composite material.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the description or in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

Other characteristics and advantages of the present invention will become clearer from the indicative and non-restrictive description of a preferred but not exclusive embodiment of a device for detecting the structural integrity of a sample object as described using the attached drawings wherein:
- fig. 1a shows a schematic view of an operative configuration of use of the detecting device according to the present description;
- fig. 1b shows schematically a physical model of the mass-spring type that reproduces the structural characteristics of the device in fig. 1a;
- fig. 2a shows schematically the frequency development of a response signal obtained by the device according to the present description;
- fig. 2b shows schematically the frequency development of a different response signal obtained by the device according to the present description;
- fig. 3 shows schematically a part of the device in fig. 1a without some parts, to make those otherwise hidden visible.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

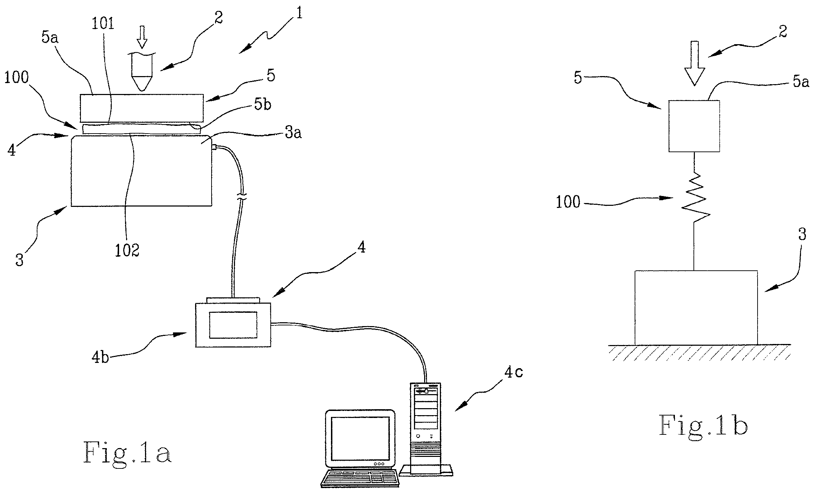

With reference to the attached fig. 1a, a device to detect the structural integrity of a sample object is shown and is indicated by the reference number 1.

The detecting device 1 allows to carry out a control test to determine the presence of defects in resilient materials such as, for example, consolidated polymers or materials for mechanical/building/industrial applications. In particular, the portion of material to be tested is called sample object 100.

In a possible embodiment, the detecting device 1 comprises at least a beating element 2, an inertial body 3 and acquisition means 4. Hereafter in the description all these elements are defined in more detail.

The beating element 2 is configured to impart a mechanical stress of the impulsive type at least on the sample object 100.

The rigid inertial body 3 is configured to support at least the sample object 100 and to counteract rigidly the mechanical stress imparted on the sample object 100 while the control test is being carried out.

The acquisition means 4 are configured to monitor a response signal from at least the sample object 100 while the control test is being carried out.

According to the present description, the detecting device 1 comprises an exciting body 5 that can be activated on the sample object 100 while the control test is being carried out. The impact of the beating element 2 on the exciting body 5 allows to impart the mechanical stress on the sample object 100. Preferably, the beating element 2 contacts the exciting body 5 by means of an impact surface 5a of the exciting body 5.

In an operative configuration of use of the detecting device 1, the exciting body 5 is positioned above and in contact with the sample object 100, which in turn is operatively associated with the acquisition means 4, preferably the sample object 100 is positioned above and in contact with the acquisition means 4. The acquisition means 4 are in turn operatively associated at least with the inertial body 3, preferably the acquisition means 4 are positioned above and in contact with the inertial body 3.

Advantageously, due to the structural configuration of the device 1 described above, the detecting device 1 allows to determine the presence of structural defects in the sample object 100 by determining the dynamic stiffness of the sample object 100 itself.

In other words, the detecting device 1 (fig. 1a) exploits the measurable resonance of a system schematized in mass 5 - spring 100 - infinite mass 3 where the spring 100 itself is the sample object 100 subjected to testing, as shown in the attached fig. 1b.

In particular, the exciting body 5 and the sample object 100 are respectively able to be configured to create a mass-spring system supported by the inertial body 3 (fig. 1b). Preferably, the exciting body 5 and/or the inertial body 3 are made in the form and/or of material with infinite stiffness with respect to a stiffness of the sample object 100.

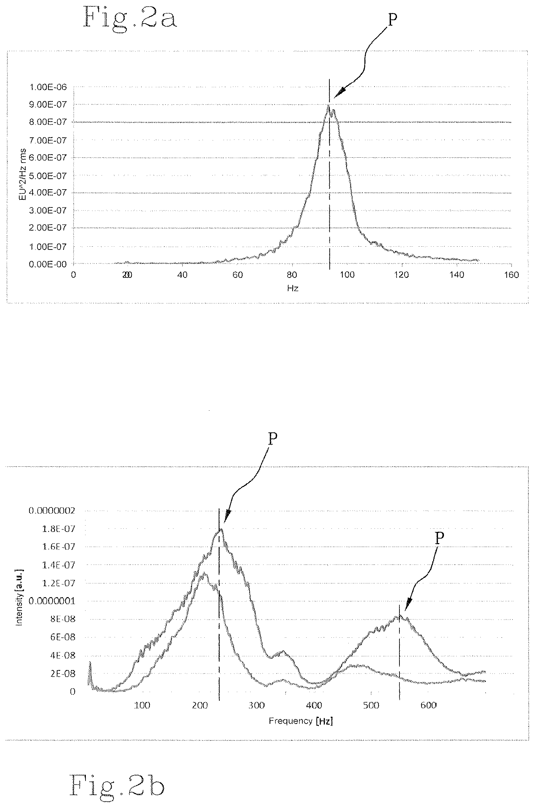

The physical model described above with reference to fig. 1b, that is, the system consisting of the sample object 100 and the exciting body 5 when excited by an impulsive source, like the beating element 2, supplies in feedback to the acquisition means 4 a response signal containing at least a vibration frequency of the sample object 100. In particular, if the material of the sample object 100 is homogeneous and structurally integral, the response signal appears graphically as a peak "P" at a certain frequency, as shown by way of non-restrictive example in the attached fig. 2a. If the material of the sample object 100 is not homogeneous and structurally integral, the inventor has found that the response signal appears graphically with more than one peak, that is, other peaks "P" at different frequencies, as shown by way of non-restrictive example in the attached fig. 2b. Therefore, the inventor has surprisingly discovered that it is possible to correlate, reliably, the number of minor peaks to information concerning the structural integrity and/or homogeneity of the sample object 100 subjected to testing.

Therefore, embodiments described here provide to analyze a resonance frequency of the sample object 100 subjected to testing following mechanical stress, to detect the presence of not only a maximum peak in the development of the resonance frequency, but also one or more minor peaks as well, and to correlate at least the overall number of peaks, maximum and minor, and possibly their entity, to the structural integrity of the sample object 100.

According to one embodiment, not shown in the attached drawings, the beating element 2 is operatively associated with the exciting body 5 and comprises a rotating eccentric element wherein an eccentric portion of the eccentric element contacts the exciting body 5 at every rotation of the eccentric element. Preferably, the eccentric portion contacts the impact surface 5a of the exciting body 5.

According to another embodiment, the beating element 2 is operatively associated with the exciting body 5 and comprises a plant with a compressible fluid, wherein at least one opening valve of the plant can be configured to create acoustic waves directed towards the impact surface 5a of the exciting body 5. Preferably, the acoustic waves generated by the beating element 2 are supersonic waves.

With reference now to the inertial body 3 of the device 1, the inertial body is an element of predetermined form and size and with a much greater stiffness than a known stiffness of the sample object 100. Preferably, the inertial body 3 is indeformable (it has an infinite stiffness) compared to the sample object 100. Preferably, the inertial body 3 is made of a mineral material selected from marble, granite or more generally any other material - even metal for example - which has a sufficiently high density compared to that of the sample object: by way of example, materials having a high density at least in a ratio 3:1, but also even higher (4:1, 5:1 and so on) compared to a density of the constructive material of the sample object 100.

The inertial body 3 has a bearing surface 3a configured to contact the acquisition means 4 and to support at least the acquisition means 4, the sample object 100 and the exciting body 5 being in an operative configuration of use of the detecting device 1.

Preferably (but not restrictively, for example depending on the possibility of testing particularly extensive pieces of material) the bearing surface 3a of the inertial body 3 is a flat surface and has an extension comprised between about 5 cm² and about 1 m².

With reference now to the exciting body 5, the exciting body 5 is an element of pre-established form and size and with a pre-established stiffness, preferably a stiffness comparable to the stiffness of the inertial body 3.

Preferably, the exciting body 5 is made of a metal material, selected from steel, cast iron, aluminum and more generally selected from metal materials (but according to requirements it can also be made of other materials, such as for example mineral materials like marble or granite or in any case with "high density" and a substantial degree of indeformability as already described with regard to the constitutive materials of the inertial body 3).

The exciting body 5 has a transmission surface 5b, opposite the impact surface 5a, configured to contact a respective surface portion of the sample object 100.

Preferably, the impact surface 5a of the exciting body 5 is a surface with an extension comprised between about 5 cm² and about 1 m².

Preferably, the transmission surface 5b of the exciting body 5 is a flat surface with an extension comprised between about 5 cm² and about 1 m².

Like the measurements given above concerning the surface extension of the bearing surface 3a, the impact surface 5a and the transmission surface 5b, the sample object 100 has a slab-like shape, preferably square, and with a side with a length preferably comprised between about 1 mm and about 1000 mm.

We will now describe in sequence the structure of the detecting device 1 during use, shown by way of example in the attached fig. 1a, wherein the beating element 2 impacts on the impact surface 5a of the exciting body 5 and at the same time transmits to the sample object 100 the mechanical stress of the impulsive type onto the surface 101 in contact with the transmission surface 5b.

The sample object 100 rests on the acquisition means 4 by means of a further surface 102, opposite surface 101. The sample object 100 and the acquisition means 4 in turn rest on the bearing surface 3a of the inertial body 3.

The acquisition means 4 allow to detect the response signal from the sample object 100 and/or the exciting body 5 following the impulsive stress generated by the beating element 2.

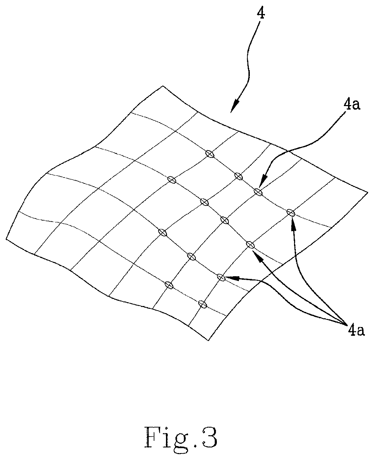

To this purpose, the acquisition means 4 comprise at least one transducer 4a configured to detect the vibration signal of the sample object 100 and to emit an equivalent signal. In other words, the transducer 4a (visible in fig. 3) is interposed between the sample object 100 and the bearing surface 3a of the inertial body 3 which offers an infinitely stiff contrast base compared to the stiffness of the sample object 100.

In a possible implementation, the acquisition means 4 comprise a multichannel acquisition card 4b connectable to at least one transducer 4a, as shown schematically by way of example in the attached figs. 1a and 3.

According to one embodiment, the acquisition means 4 comprise a plurality of transducers 4a, operatively associated with the inertial body 5 and having a predetermined arrangement.

The transducer 4a according to possible embodiments can be an accelerometer and/or a NEMS-type device and/or a MEMS-type device (and in any case, according to the present description, any transducer of a known type can be used, provided that it is suitable to capture with the due accuracy and resolution the frequency signals needed for the functioning of the invention).

According to one embodiment, the plurality of transducers 4a is arranged in a grid having a predetermined number of rows and columns, and wherein a transducer 4a is positioned at each point of intersection between a row and a column of the grid, as schematically shown by way of non-restrictive example in the attached fig. 3.

According to other embodiments, the plurality of transducers 4a can be arranged according to a reference Cartesian system of coordinates or a polar coordinate reference system or a reference system with logarithmic axes, wherein a transducer 4a is positioned at each point of intersection of said coordinates. Depending on the arrangement of the transducers 4a, a multichannel acquisition card 4b is provided, interfaceable with a processor 4c configured to process and emit values as the result of the control test.

Advantageously, the processor 4c can be configured to analyze a resonance frequency of the sample object 100 subjected to testing following mechanical stress and to detect the presence of not only a maximum peak in the development of the resonance frequency, but also one or more minor peaks as well, correlating at least the overall number of peaks, maximum and minor, and possibly their entity, to the structural integrity of the sample object 100. Taking into consideration not only the maximum peak, but also the other minor values (minor peaks) of the resonance frequency, it is possible to carry out a detection of the structural integrity of the sample object 100, and for example to detect the presence of gaps, discontinuities, insertions of material, composite layers, or other structural anomalies. This can be particularly advantageous in the application of the device and method according to the present description to detect the structural integrity of a sample object made of composite material.

The present invention obtains the preset purposes.

Advantageously, the device and method to detect the structural integrity of a sample object allow to carry out a control test of the non-destructive type directly in the production line in the context of industrial production.

Advantageously, the device and method to detect the structural integrity of a sample object according to the present description allows to carry out control tests on a sample object in very short times and with greatly reduced costs compared with the state of the art.

Advantageously, the device and method to detect the structural integrity of a sample object according to the present description does not generate/function using special materials that imply risks for the worker and/or that have high disposal costs, as happens instead in the state of the art.

## Claims

1. Device (1) configured to detect the structural integrity of a sample object (100), comprising:
- a beating element (2) configured to impart a mechanical stress of the impulsive type on said sample object (100);
- a rigid inertial body (3) configured to support said sample object (100) and to counteract rigidly said mechanical stress;
- acquisition means (4) to monitor a response signal from at least said stressed sample object (100) and operatively associated at least with said inertial body (3);
- an exciting body (5) able to act on said sample object (100), said sample object (100) being operatively connected with said acquisition means (4), said beating element (2) being such as to impart a mechanical stress to said sample object (100) impacting on said exciting body (5);
wherein said acquisition means (4) comprise at least one transducer (4a) configured to detect a response signal from said sample object (100) and/or from said exciting body (5) in an operating configuration of use of said device (1), said response signal being a signal containing at least one vibration frequency of the sample object (100),
**characterized in that** said exciting body (5) and said sample object (100) are respectively configured to provide a mass-spring system supported by said inertial body (3) and wherein said spring of said system is the sample object (100) subjected to testing,
wherein said exciting body (5) has an impact surface (5a) configured to impact said beating element (2) and a transmission surface (5b) configured to contact a respective surface (101) of said sample object (100) in an operating configuration of use of said device (1),
wherein when said mass-spring system consisting of the sample object (100) and the exciting body (5) is excited by the impulsive mechanical stress of the beating element (2), said mass-spring system supplies in feedback to the acquisition means (4) a response signal containing at least a vibration frequency of the sample object (100),
further wherein said device (1) comprises a processor (4c) configured to analyze a resonance frequency of said sample object (100) subjected to testing following mechanical stress and to detect the presence of not only a maximum peak in the development of the resonance frequency, but also one or more minor peaks as well, correlating at least the overall number of peaks, maximum and minor, and possibly their entity, to the structural integrity of said sample object (100).

2. Device (1) as in claim 1, wherein the exciting body (5) and/or the inertial body (3) are made in the form and/or of a material with a much greater stiffness with respect to the stiffness of said sample object (100).

3. Device (1) as in claim 1, wherein said acquisition means (4) comprise a plurality of transducers (4a) operatively connected with said inertial body (3) and distributed on a bearing surface (3a) of said inertial body (3).

4. Device (1) as in claim 3, wherein said plurality of transducers (4a) is arranged in such a way as to work completely on a working portion of said bearing surface (3a) and a further respective surface (102) of said sample object (100) in an operating configuration of use of said detecting device (1).

5. Device (1) as in claim 3 or 4, wherein said plurality of transducers (4a) is arranged according to a grid having a predetermined number of rows and columns, and wherein a transducer (4a) is arranged at each point of intersection between a row and a column of said grid.

6. Device (1) as in claim 5 or 6, wherein said plurality of transducers (4a) is arranged according to a reference Cartesian system of coordinates or a polar coordinate reference system or a reference system with logarithmic axes, and wherein a transducer (4a) is arranged at each point of intersection of said coordinates.

7. Device (1) as in claim 1 or 5, wherein said transducer (4a) is an accelerometer and/or a NEMS-type device and/or a MEMS-type device.

8. Device (1) as in claim 1, wherein said acquisition means (4) comprise a multichannel acquisition card (4b) connectable to at least one transducer (4a).

9. Device (1) as in claim 1, wherein said inertial body (3) is an element of predetermined shape and size and with a much greater stiffness, preferably being indeformable with respect to the sample object (100), of a known stiffness of said sample object (100), preferably said inertial body (3) being more preferably made of a mineral material selected from marble, granite and/or other materials having a high density, at least in the ratio 3:1 with respect to a density of the constitutive material of the sample object (100).

10. Device (1) as in any claim hereinbefore from 1 to 9, wherein said inertial body (3) has a bearing surface (3a) configured to contact said acquisition means (4) and to support at least said acquisition means (4), said sample object (100) and said exciting body (5) being in an operating configuration of use of said device (1), preferably said bearing surface (3a) being a flat surface and having an extension comprised between about 5 cm² and about 1 m².

11. Device (1) as in claim 1, wherein said exciting body (5) is made of a metal material.

12. Device (1) as in any of the claims hereinbefore from 1 to 11, wherein said impact surface (5a) is a surface having an extension comprised between about 5 cm² and about 1 m².

13. Device (1) as in claim 12, wherein said transmission surface (5b) is a flat surface having an extension comprised between about 5 cm² and about 1 m².

14. Device (1) as in one or more of the claims hereinbefore from 1 to 13, wherein said beating element (2) comprises an eccentric rotating element operatively connected with said exciting body, wherein an eccentric portion of said eccentric element contacts said exciting body (5) at every rotation of said eccentric element, said eccentric portion preferably contacting an impact surface (5a) of said exciting body (5).

15. Device (1) as in one or more of the claims hereinbefore from 1 to 13, wherein said beating element (2) comprises a plant with a compressible fluid, wherein at least one opening valve of said plant can be configured to create acoustic waves directed towards an impact surface (5a).

16. Method to detect the structural integrity of a sample object (100), comprising:
- imparting a mechanical stress of the impulsive type on said sample object (100) by means of a beating element (2);
- supporting said sample object (100) and counteracting rigidly said mechanical stress by means of an inertial body (3);
- monitoring a response signal from at least said stressed sample object (100) by means of acquisition means (4) operatively connected at least with said inertial body (3);
- activating an exciting body (5) on said sample object (100), said sample object (100) being operatively connected with said acquisition means (4), said beating element (2) imparting a mechanical stress on said sample object (100) impacting on said exciting body (5);
wherein said exciting body (5) and said sample object (100) respectively create a mass-spring system supported by said inertial body (3) and wherein said spring of said system is the sample object (100) subjected to testing,
wherein said acquisition means (4) comprise at least one transducer (4a) configured to detect a response signal from said sample object (100) and/or from said exciting body (5) in an operating configuration of use of said device (1), said response signal being a signal containing at least one vibration frequency of the sample object (100) and wherein said exciting body (5) has an impact surface (5a) configured to impact said beating element (2) and a transmission surface (5b) configured to contact a respective surface (101) of said sample object (100) in an operating configuration of use of said device (1),
wherein when said mass-spring system consisting of the sample object (100) and the exciting body (5) is excited by the impulsive mechanical stress of the beating element (2), said mass-spring system supplies in feedback to the acquisition means (4) a response signal containing at least a vibration frequency of the sample object (100)
further wherein said method comprises:
- analyzing a resonance frequency of said sample object (100) subjected to testing following the mechanical stress,
- detecting the presence of not only a maximum peak in the development of the resonance frequency, but also one or more minor peaks as well,
- correlating at least the overall number of peaks, maximum and minor, and possibly their entity, to the structural integrity of said sample object (100).

## Patentansprüche

1. Vorrichtung (1) zur Erkennung der strukturellen Integrität eines Probenobjekts (100), umfassend:
- ein Schlagelement (2), das so konfiguriert ist, dass es eine mechanische Belastung impulsiver Art auf das Probenobjekt (100) ausübt;
- einen unnachgiebigen Trägheitskörper (3), der so konfiguriert ist, dass er das Probenobjekt (100) trägt und unnachgiebig der mechanischen Belastung entgegenwirkt;
- Erfassungsmittel (4) zur Überwachung eines Antwortsignals von zumindest dem belasteten Probenobjekt (100), die zumindest mit dem Trägheitskörper (3) operativ verbunden sind;
- einen Erregerkörper (5), der in der Lage ist, auf das Probenobjekt (100) zu wirken, wobei das Probenobjekt (100) operativ mit den Erfassungsmitteln (4) verbunden ist, wobei das Schlagelement (2) so ausgebildet ist, dass es durch Aufschlagen auf den Erregerkörper (5) eine mechanische Belastung auf das Probenobjekt (100) ausübt;
wobei die Erfassungsmittel (4) mindestens einen Signalwandler (4a) umfassen, der so konfiguriert ist, dass er ein Antwortsignal von dem Probenobjekt (100) und/oder von dem Erregerkörper (5) in einer Betriebskonfiguration der Verwendung der Vorrichtung (1) detektiert, wobei das Antwortsignal ein Signal ist, das mindestens eine Schwingungsfrequenz des Probenobjekts (100) enthält,
**dadurch gekennzeichnet, dass** der Erregerkörper (5) und das Probenobjekt (100) jeweils so konfiguriert sind, dass sie ein Masse-Feder-System bereitstellen, das durch den Trägheitskörper (3) getragen wird, und wobei die Feder des Systems das der Prüfung unterzogene Probenobjekt (100) ist,
wobei der Erregerkörper (5) eine Aufschlagfläche (5a), die so konfiguriert ist, dass das Schlagelement (2) darauf aufschlägt, und eine Übertragungsfläche (5b), die so konfiguriert ist, dass sie eine entsprechende Oberfläche (101) des Probenobjekts (100) in einer Betriebskonfiguration der Verwendung der Vorrichtung (1) kontaktiert, aufweist,
wobei, wenn das aus dem Probenobjekt (100) und dem Erregerkörper (5) bestehende Masse-Feder-System durch die impulsive mechanische Belastung des Schlagelements (2) erregt wird, das Masse-Feder-System als Feedback den Erfassungsmitteln (4) ein Antwortsignal, welches mindestens eine Schwingungsfrequenz des Probenobjekts (100) enthält, zur Verfügung stellt, wobei die Vorrichtung (1) außerdem einen Prozessor (4c) umfasst, der so konfiguriert ist, dass er eine Resonanzfrequenz des der Prüfung unterzogenen Probenobjekts (100) in Folge auf die mechanische Belastung analysiert und nicht nur die Anwesenheit eines maximalen Peaks in der Entwicklung der Resonanzfrequenz, sondern ebenso eines oder mehrerer kleinerer Peaks detektiert und mindestens die Gesamtzahl an Peaks, Haupt- und Nebenpeaks, und gegebenenfalls ihre Entität mit der strukturellen Integrität des Probenobjekts (100) korreliert.

2. Vorrichtung (1) gemäß Anspruch 1, wobei der Erregerkörper (5) und/oder der Trägheitskörper (3) in der Form und/oder aus einem Material gefertigt sind, das eine viel höhere Steifigkeit in Bezug auf die Steifigkeit des Probenobjekts (100) aufweist.

3. Vorrichtung (1) gemäß Anspruch 1, wobei die Erfassungsmittel (4) eine Vielzahl von Signalwandlern (4a) umfassen, die operativ mit dem Trägheitskörper (3) verbunden und auf einer Auflagerfläche (3a) des Trägheitskörpers (3) verteilt sind.

4. Vorrichtung (1) gemäß Anspruch 3, wobei die Vielzahl an Signalwandlern (4a) so angeordnet ist, dass sie vollständig auf einem Arbeitsabschnitt der Auflagerfläche (3a) und einer weiteren entsprechenden Oberfläche (102) des Probenobjekts (100) in einer Betriebskonfiguration der Verwendung der Erkennungsvorrichtung (1) arbeiten.

5. Vorrichtung (1) gemäß Anspruch 3 oder 4, wobei die Vielzahl an Signalwandlern (4a) in einem Gitter mit einer vorbestimmten Anzahl an Zeilen und Spalten angeordnet ist, und wobei ein Signalwandler (4a) an jedem Schnittpunkt zwischen einer Zeile und einer Spalte des Gitters angeordnet ist.

6. Vorrichtung (1) gemäß Anspruch 5 oder 6, wobei die Vielzahl an Signalwandlern (4a) in einem kartesischen Referenz-Koordinatensystem oder einem polaren Referenz-Koordinatensystem oder einem Referenzsystem mit logarithmischen Achsen angeordnet ist, und wobei ein Signalwandler (4a) an jedem Schnittpunkt der Koordinaten angeordnet ist.

7. Vorrichtung (1) gemäß Anspruch 1 oder 5, wobei der Signalwandler (4a) ein Beschleunigungssensor und/oder eine Vorrichtung vom NEMS-Typ und/oder eine Vorrichtung vom MEMS-Typ ist.

8. Vorrichtung (1) gemäß Anspruch 1, wobei die Erfassungsmittel (4) eine Multichannel-Erfassungskarte (4b) umfassen, die mit wenigstens einem Signalwandler (4a) verbunden werden kann.

9. Vorrichtung (1) gemäß Anspruch 1, wobei der Trägheitskörper (3) ein Element mit vorbestimmter Form und Größe und einer viel höheren Steifigkeit als einer bekannten Steifigkeit des Probenobjekts (100) ist und vorzugsweise in Bezug auf das Probenobjekt (100) unverformbar ist, wobei der Trägheitskörper (3) noch bevorzugter aus einem Mineralmaterial ausgewählt aus Marmor, Granit und/oder anderen Materialien mit hoher Dichte, zumindest im Verhältnis 3:1 in Bezug auf die Dichte des bildenden Materials des Probenobjekts (100), gefertigt ist.

10. Vorrichtung (1) gemäß irgendeinem der vorhergehenden Ansprüche 1 bis 9, wobei der Trägheitskörper (3) eine Auflagerfläche (3a) aufweist, die so konfiguriert ist, dass sie die Erfassungsmittel (4) kontaktiert und zumindest die Erfassungsmittel (4) trägt, wobei das Probenobjekt (100) und der Erregerkörper (5) in einer Betriebskonfiguration der Verwendung der Vorrichtung (1) sind, wobei vorzugsweise die Auflagerfläche (3a) eine flache Oberfläche ist und eine Ausdehnung zwischen etwa 5 cm² und etwa 1 m² aufweist.

11. Vorrichtung (1) gemäß Anspruch 1, wobei der Erregerkörper (5) aus einem Metallmaterial gefertigt ist.

12. Vorrichtung (1) gemäß irgendeinem der vorhergehenden Ansprüche 1 bis 11, wobei die Aufschlagfläche (5a) eine Oberfläche mit einer Ausdehnung zwischen etwa 5 cm² und etwa 1 m² ist.

13. Vorrichtung (1) gemäß Anspruch 12, wobei die Übertragungsfläche (5b) eine flache Oberfläche mit einer Ausdehnung zwischen etwa 5 cm² und etwa 1 m² ist.

14. Vorrichtung (1) gemäß einem oder mehreren der vorhergehenden Ansprüche 1 bis 13, wobei das Schlagelement (2) ein exzentrisches rotierendes Element umfasst, das operativ mit dem Erregerkörper verbunden ist, wobei ein exzentrischer Abschnitt des exzentrischen Elements den Erregerkörper (5) bei jeder Rotation des exzentrischen Elements kontaktiert, wobei der exzentrische Abschnitt vorzugsweise eine Aufschlagfläche (5a) des Erregerkörpers (5) kontaktiert.

15. Vorrichtung (1) gemäß einem oder mehreren der vorhergehenden Ansprüche 1 bis 13, wobei das Schlagelement (2) eine Anlage mit einem komprimierbaren Fluid umfasst, wobei mindestens ein Öffnungsventil der Anlage so konfiguriert sein kann, dass es auf eine Aufschlagfläche (5a) gerichtete akustische Wellen, erzeugt.

16. Verfahren zur Erkennung der strukturellen Integrität eines Probenobjekts (100), umfassend:
- Ausüben einer mechanischen Belastung impulsiver Art auf das Probenobjekt (100) durch ein Schlagelement (2);
- Tragen des Probenobjekts (100) und unnachgiebiges Entgegenwirken der mechanischen Belastung durch einen Trägheitskörper (3);
- Überwachen eines Antwortsignals von zumindest dem belasteten Probenobjekt (100) durch Erfassungsmittel (4), die zumindest mit dem Trägheitskörper (3) operativ verbunden sind;
- Aktivieren eines Erregerkörpers (5) auf dem Probenobjekt (100), wobei das Probenobjekt (100) operativ mit den Erfassungsmitteln (4) verbunden ist, wobei das Schlagelement (2) eine mechanische Belastung auf das Probenobjekt (100) ausübt, indem es auf den Erregerkörper (5) aufschlägt;
wobei der Erregerkörper (5) und das Probenobjekt (100) jeweils ein Masse-Feder-System erzeugen, das durch den Trägheitskörper (3) getragen wird, und wobei die Feder des Systems das der Prüfung unterzogene Probenobjekt (100) ist,
wobei die Erfassungsmittel (4) mindestens einen Signalwandler (4a) umfassen, der so konfiguriert ist, dass er ein Antwortsignal von dem Probenobjekt (100) und/oder von dem Erregerkörper (5) in einer Betriebskonfiguration der Verwendung der Vorrichtung (1) detektiert, wobei das Antwortsignal ein Signal ist, das mindestens eine Schwingungsfrequenz des Probenobjekts (100) ist, und wobei der Erregerkörper (5) eine Aufschlagfläche (5a), die so konfiguriert ist, dass das Schlagelement (2) darauf aufschlägt, und eine Übertragungsfläche (5b), die so konfiguriert ist, dass sie eine entsprechende Oberfläche (101) des Probenobjekts (100) in einer Betriebskonfiguration der Verwendung der Vorrichtung (1) kontaktiert, aufweist, wobei, wenn das aus dem Probenobjekt (100) und dem Erregerkörper (5) bestehende Masse-Feder-System durch die impulsive mechanische Belastung des Schlagelements (2) erregt wird, das Masse-Feder-System als Feedback den Erfassungsmitteln (4) ein Antwortsignal, welches mindestens eine Schwingungsfrequenz des Probenobjekts (100) enthält, zur Verfügung stellt, wobei das Verfahren außerdem umfasst:
- Analysieren einer Resonanzfrequenz des der Prüfung unterzogenen Probenobjekts (100) in Folge auf die mechanische Belastung,
- Detektieren der Anwesenheit nicht nur eines maximalen Peaks in der Entwicklung der Resonanzfrequenz, sondern ebenso eines oder mehrerer kleinerer Peaks,
- Korrelieren zumindest der Gesamtzahl an Peaks, Haupt- und Nebenpeaks, und gegebenenfalls ihrer Entität, mit der strukturellen Integrität des Probenobjekts (100).

## Revendications

1. Dispositif (1) configuré pour détecter l'intégrité structurelle d'un objet échantillon (100), comprenant :
- un élément de battement (2) configuré pour conférer une contrainte mécanique du type impulsif audit objet échantillon (100) ;
- un corps inertiel rigide (3) configuré pour supporter ledit objet échantillon (100) et pour s'opposer rigidement à ladite contrainte mécanique ;
- des moyens d'acquisition (4) pour surveiller un signal de réponse provenant d'au moins ledit objet échantillon contraint (100) et associé de manière opérationnelle au moins audit corps inertiel (3) ;
- un corps d'excitation (5) capable d'agir sur ledit objet échantillon (100), ledit objet échantillon (100) étant relié de manière opérationnelle auxdits moyens d'acquisition (4), ledit élément de battement (2) étant tel qu'il confère une contrainte mécanique audit objet échantillon (100) qui frappe ledit corps d'excitation (5) ;
dans lequel lesdits moyens d'acquisition (4) comprennent au moins un transducteur (4a) configuré pour détecter un signal de réponse provenant dudit objet échantillon (100) et/ou dudit corps d'excitation (5) dans une configuration de fonctionnement d'utilisation dudit dispositif (1), ledit signal de réponse étant un signal contenant au moins une fréquence de vibration de l'objet échantillon (100),
**caractérisé en ce que** ledit corps d'excitation (5) et ledit objet échantillon (100) sont respectivement configurés pour fournir un système masse-ressort supporté par ledit corps inertiel (3) et dans lequel ledit ressort dudit système est l'objet échantillon (100) soumis à un essai,
dans lequel ledit corps d'excitation (5) a une surface d'impact (5a) configurée pour frapper ledit élément de battement (2) et une surface de transmission (5b) configurée pour entrer en contact avec une surface respective (101) dudit objet échantillon (100) dans une configuration de fonctionnement d'utilisation dudit dispositif (1),
dans lequel, lorsque ledit système masse-ressort constitué de l'objet échantillon (100) et du corps d'excitation (5) est excité par la contrainte mécanique impulsive de l'élément de battement (2), ledit système masse-ressort fournit en retour aux moyens d'acquisition (4) un signal de réponse contenant au moins une fréquence de vibration de l'objet échantillon (100),
dans lequel, en outre, ledit dispositif (1) comprend un processeur (4c) configuré pour analyser une fréquence de résonance dudit objet échantillon (100) soumis à un test
après la contrainte mécanique et pour détecter la présence non seulement d'un pic maximal dans le développement de la fréquence de résonance, mais également d'un ou de plusieurs pics mineurs, corrélant au moins le nombre global de pics, maximal et mineur, et éventuellement leur entité, à l'intégrité structurelle dudit objet échantillon (100).

2. Dispositif (1) selon la revendication 1, dans lequel le corps d'excitation (5) et/ou le corps inertiel (3) sont réalisés sous la forme et/ou sont fait d'un matériau ayant une rigidité beaucoup plus grande par rapport à la rigidité dudit objet échantillon (100).

3. Dispositif (1) selon la revendication 1, dans lequel lesdits moyens d'acquisition (4) comprennent une pluralité de transducteurs (4a) connectés de manière opérationnelle audit corps inertiel (3) et distribués sur une surface d'appui (3a) dudit corps inertiel (3).

4. Dispositif (1) selon la revendication 3, dans lequel ladite pluralité de transducteurs (4a) est agencée de manière à travailler complètement sur une partie de travail de ladite surface d'appui (3a) et une autre surface respective (102) dudit objet échantillon (100) dans une configuration de fonctionnement d'utilisation dudit dispositif de détection (1).

5. Dispositif (1) selon la revendication 3 ou 4, dans lequel ladite pluralité de transducteurs (4a) est agencée selon une grille ayant un nombre prédéterminé de rangées et de colonnes, et dans lequel un transducteur (4a) est agencé à chaque point d'intersection entre une rangée et une colonne de ladite grille.

6. Dispositif (1) selon la revendication 5 ou 6, dans lequel ladite pluralité de transducteurs (4a) est agencée selon un système cartésien de coordonnées de référence ou un système de référence de coordonnées polaires ou un système de référence avec des axes logarithmiques, et dans lequel un transducteur (4a) est agencé à chaque point d'intersection desdites coordonnées.

7. Dispositif (1) selon la revendication 1 ou 5, dans lequel ledit transducteur (4a) est un accéléromètre et/ou un dispositif de type NEMS et/ou un dispositif de type MEMS.

8. Dispositif (1) selon la revendication 1, dans lequel lesdits moyens d'acquisition (4) comprennent une carte d'acquisition multicanal (4b) pouvant être connectée à au moins un transducteur (4a).

9. Dispositif (1) selon la revendication 1, dans lequel ledit corps inertiel (3) est un élément de forme et de taille prédéterminées et avec une rigidité beaucoup plus grande, de préférence étant indéformable par rapport à l'objet échantillon (100), qu'une rigidité connue dudit objet échantillon (100), de préférence ledit corps inertiel (3) étant plus préférablement fait d'un matériau minéral sélectionné parmi le marbre, le granit et/ou d'autres matériaux ayant une densité élevée, au moins dans le rapport 3:1 par rapport à une densité du matériau constitutif de l'objet échantillon (100).

10. Dispositif (1) selon l'une quelconque des revendications précédentes 1 à 9, dans lequel ledit corps inertiel (3) a une surface d'appui (3a) configurée pour entrer en contact avec lesdits moyens d'acquisition (4) et pour supporter au moins lesdits moyens d'acquisition (4), ledit objet échantillon (100) et ledit corps d'excitation (5) étant dans une configuration de fonctionnement d'utilisation dudit dispositif (1), de préférence ladite surface d'appui (3a) étant une surface plate et ayant une extension comprise entre environ 5 cm² et environ 1 m².

11. Dispositif (1) selon la revendication 1, dans lequel ledit corps d'excitation (5) est fait d'un matériau métallique.

12. Dispositif (1) selon l'une quelconque des revendications précédentes 1 à 11, dans lequel ladite surface d'impact (5a) est une surface ayant une extension comprise entre environ 5 cm² et environ 1 m².

13. Dispositif (1) selon la revendication 12, dans lequel ladite surface de transmission (5b) est une surface plate ayant une extension comprise entre environ 5 cm² et environ 1 m².

14. Dispositif (1) selon une ou plusieurs des revendications précédentes 1 à 13, dans lequel ledit élément de battement (2) comprend un élément rotatif excentrique relié de manière opérationnelle audit corps d'excitation, dans lequel une partie excentrique dudit élément excentrique est en contact avec ledit corps d'excitation (5) à chaque rotation dudit élément excentrique, ladite partie excentrique étant de préférence en contact avec une surface d'impact (5a) dudit corps d'excitation (5).

15. Dispositif (1) selon l'une ou plusieurs des revendications précédentes 1 à 13, dans lequel ledit élément de battement (2) comprend une installation avec un fluide compressible, dans lequel au moins une vanne d'ouverture de ladite installation peut être configurée pour créer des ondes acoustiques dirigées vers une surface d'impact (5a).

16. Procédé de détection de l'intégrité structurelle d'un objet échantillon (100), consistant à :
- transmettre une contrainte mécanique de type impulsif sur ledit objet échantillon (100) au moyen d'un élément de battement (2) ;
- supporter ledit objet échantillon (100) et s'opposer rigidement à ladite contrainte mécanique au moyen d'un corps inertiel (3) ;
- surveiller un signal de réponse provenant au moins dudit objet échantillon contraint (100) par l'intermédiaire des moyens d'acquisition (4) reliés de manière opérationnelle au moins audit corps inertiel (3) ;
- activer un corps d'excitation (5) sur ledit objet échantillon (100), ledit objet échantillon (100) étant connecté de manière opérationnelle auxdits moyens d'acquisition (4), ledit élément de battement (2) conférant une contrainte mécanique audit objet échantillon (100) frappant ledit corps d'excitation (5) ;
dans lequel ledit corps d'excitation (5) et ledit objet échantillon (100) créent respectivement un système masse-ressort supporté par ledit corps inertiel (3) et dans lequel ledit ressort dudit système est l'objet échantillon (100) soumis à un essai,
dans lequel lesdits moyens d'acquisition (4) comprennent au moins un transducteur (4a) configuré pour détecter un signal de réponse provenant dudit objet échantillon (100) et/ou dudit corps d'excitation (5) dans une configuration de fonctionnement d'utilisation dudit dispositif (1), ledit signal de réponse étant un signal contenant au moins une fréquence de vibration de l'objet échantillon (100) et dans lequel ledit corps d'excitation (5) a une surface d'impact (5a) configurée pour frapper ledit élément de battement (2) et une surface de transmission (5b) configurée pour entrer en contact avec une surface respective (101) dudit objet échantillon (100) dans une configuration de fonctionnement d'utilisation dudit dispositif (1),
dans lequel, lorsque ledit système masse-ressort constitué de l'objet échantillon (100) et du corps d'excitation (5) est excité par la contrainte mécanique impulsive de l'élément de battement (2), ledit système masse-ressort fournit en retour aux moyens d'acquisition (4) un signal de réponse contenant au moins une fréquence de vibration de l'objet échantillon (100) dans lequel, en outre, ledit procédé consiste à :
- analyser une fréquence de résonance dudit objet échantillon (100) soumis à un test après la contrainte mécanique,
- détecter la présence non seulement d'un pic maximal dans le développement de la fréquence de résonance, mais aussi d'un ou de plusieurs pics mineurs,
- corréler au moins le nombre global de pics, maximal et mineur, et éventuellement leur entité, à l'intégrité structurelle dudit objet échantillon (100).
